# EUROPEAN PATENT SPECIFICATION

(11) **EP 3 640 163 B1**
(45) Date of publication and mention of the grant of the patent: **24.03.2021**
(21) Application number: 19198927.6
(22) Date of filing: 23.09.2019
(51) Int. Cl.: B65G 17/08, B65G 17/40

(54) **ARTICULATED LINK CONVEYOR BELT AND ITS RESPECTIVE LINK ARTICULATION SYSTEM**
GELENKVERBINDUNGSFÖRDERBAND UND ENTSPRECHENDES GELENKVERBINDUNGSSYSTEM
COURROIE DE TRANSPORTEUR À LIAISON ARTICULÉE ET SON SYSTÈME D'ARTICULATION DE LIAISON

(30) Priority: 16.10.2018 IT 201800009505
(43) Date of publication of application: 22.04.2020
(73) Proprietor: Movex S.p.A., 24060 Castelli Calepio (BG) (IT)
(72) Inventor: MARSETTI, Matteo, 24060 TELGATE (BG) (IT); MARSETTI, Sergio, 6900 PARADISO (CH)
(74) Representative: Ottazzo, Marco Francesco Agostino

(56) References cited:
- EP-A1- 0 795 496
- EP-A1- 3 040 295

## Description

The present invention relates in general to bulk goods conveyors provided with conveyor belts and, in particular, to a link articulation system for an articulated link conveyor belt.

As known, a bulk goods conveyor defines a movement surface for generic goods to be conveyed. Such a conveyor is generally provided with one or several movable and flexible conveyor belts. Each conveyor belt is in turn formed of a plurality of modular elements, also called "links", which are connected to each other to form a closed loop. Such closed loop conveyor belt is designed to at least partially slide on a support structure, which defines a rectilinear or curvilinear feeding direction of the movement surface.

The modular elements of the conveyor belt are reciprocally joined by way of an articulation system comprising rotoidal joints. As a matter of fact, projections (so-called "hinge loops") are arranged at the opposed sides of each pair of contiguous modular elements which interpenetrate and are held together by one articulation pin for each rotoidal joint. This articulation pin crosses a sequence of holes, made in the projections of the modular elements, which develop along a transversal direction substantially perpendicular to the longitudinal direction characterizing the movement of the conveyor belt.

The articulation pins of the modular elements should remain in their respective holes for a correct operation of the conveyor belt without any possibility for them of coming out, but for maintenance operations, which, however, are carried out while the conveyor belt is not running. For this purpose, different solutions are known to axially lock the articulation pins of the modular elements, so as to prevent them from accidentally coming out.

For example, document EP-A-3040295 on behalf of this applicant discloses a conveyor belt according to the preamble of claim 1, wherein each articulation joint between the individual modular elements is formed of a pin, at least one end of which features a cross section that is greater than the cross section of the remaining part of the pin. The end featuring an increased cross section is conveniently formed of a spherical body and is preset to enter a respective shaped seat obtained in one of the hinge loops.

Despite this articulation system allows to assemble the articulation pins in an easy and fast manner, it does not allow to disassemble such pins in an as much easy and fast manner. Each pin and its respective spherical body being constructed in one piece, and the spherical body having to provide an appropriate resistance to withdrawal when inserted in its own shaped seat, make the operation to be performed for withdrawing a complete articulation assembly rather arduous, especially on conveyor belts featuring substantial widths.

Document US-A-5020659 discloses a conveyor belt wherein each articulation joint between the modular elements is formed of a pin provided with a locking plug in correspondence with at least one of its ends. During the articulation system assembling step, each pin, once inserted in its respective hinge loops, is locked in position by way of said locking plug.

However, in this articulation system too, the operation to be carried out to withdraw a complete articulation assembly might be rather arduous. As a matter of fact, specific tools are necessary to disengage the locking plug from its own shaped seat, and this operation might even result in the locking plug itself getting broken.

An object of the present invention is therefore to implement an articulated link conveyor belt, in particular a link articulation system for such conveyor belt, which is capable of solving the above-mentioned drawbacks of the prior art in an extremely simple, cost-effective, and particularly functional manner.

In details, it is an object of the present invention to provide an articulated link conveyor belt that allows to perform not only articulation pin assembling operations, but also and above all articulation pin disassembling operations, in a fast and more effective manner as compared to the conveyor belts according to the prior art.

This object and others according to the present invention are achieved by providing an articulated link conveyor belt as set forth in claim 1.

Further features of the invention are highlighted in the dependent claims, which form an integral part of the present disclosure.

The features and advantages of an articulated link conveyor belt according to the present invention will be more apparent from the following exemplary, non-limitative description, which makes reference to the schematic drawings attached hereto, wherein:

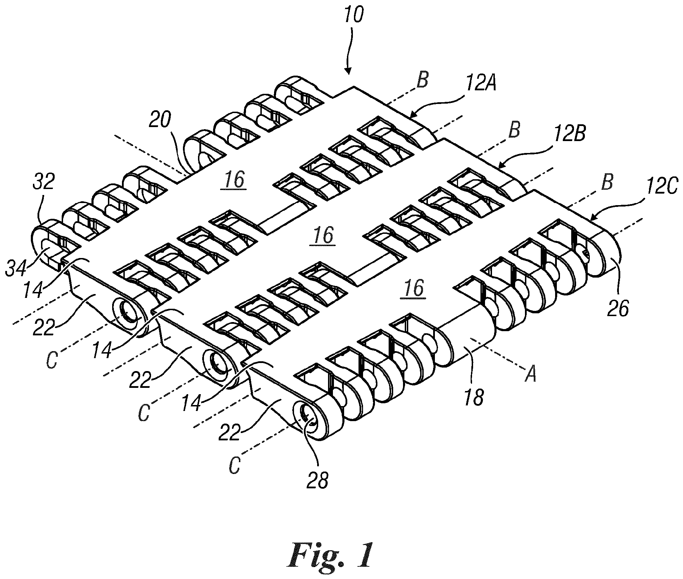

figure 1 is a top perspective view of three modular elements or links of an articulated link conveyor belt according to the present invention;

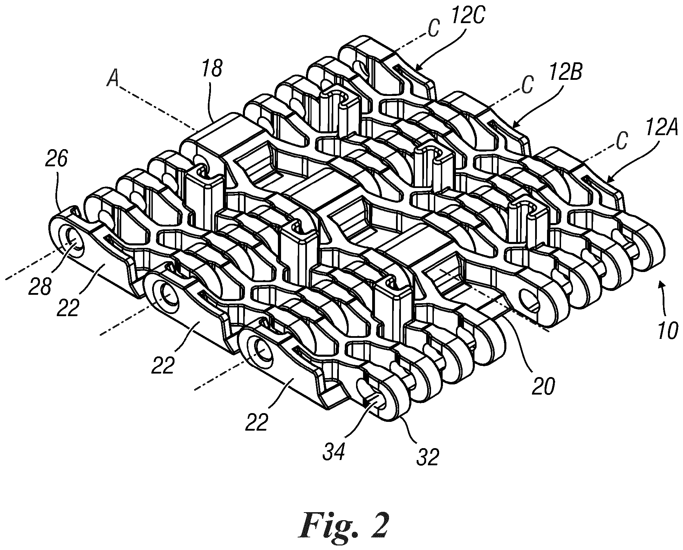

figure 2 is a bottom perspective view of the modular elements or links of figure 1;

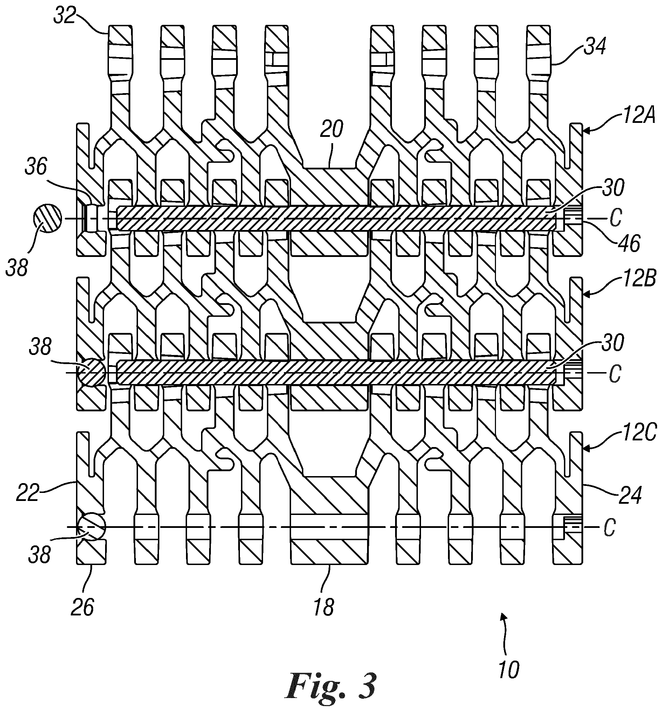

figure 3 is a horizontal cross-sectional view of the modular elements or links of figure 1, shown in assembled configuration;
figure 4 is an enlarged view of the modular elements or links of figure 3;
figure 5 is a bottom perspective view of the modular elements or links of figure 1, while a component of its respective articulation system is being disassembled; and
figure 6 is an enlarged view of the detail identified by VI in figure 5.

With reference to the figures, they show a preferred embodiment of the articulated link conveyor belt according to the present invention. The articulated link conveyor belt is identified as a whole by the reference number 10. The conveyor belt 10 is configured for being used in a generic conveyer line for conveying various objects, for example foodstuffs, along a predefined feeding direction A.

The conveyor belt 10 comprises a plurality of modular elements or links 12A, 12B, 12C arranged one after the other and articulated between each other. Each modular element 12A, 12B, 12C comprises a respective intermediate portion 14, which develops along a transversal axis B substantially perpendicular to the feeding direction A of the conveyor belt 10. Each intermediate portion 14 is provided with an upper support surface 16 for supporting the objects to be conveyed, a front side 18, a rear side 20, a first lateral side 22, and a second lateral side 24.

On the front side 18 of each intermediate portion 14 there is provided a first plurality of projections, or connecting ends or hinge loops 26, which extend along the feeding direction A of the conveyor belt 10. In the embodiment here illustrated in the figures, the first projections 26 define respective support surfaces that are substantially coplanar with respect to the upper support surface 16 of the intermediate portion 14 of each modular element 12A, 12B, 12C.

The first plurality of projections 26 is provided with a first plurality of respective through holes 28. These first through holes 28 are lined up along a single axis C that is substantially parallel to the transversal axis B and consequently is substantially perpendicular to the feeding direction A of the conveyor belt 10. These first through holes 28 are configured for receiving a connecting pin 30 that is part of the articulation system of the conveyor belt 10.

On the rear side 20 of each intermediate portion 14 there is provided a second plurality of projections, or connecting ends or hinge loops 32, which extend along the feeding direction A of the conveyor belt 10, but in the opposed direction with respect to the first plurality of projections 26. In the embodiment here illustrated in the figures, the second projections 32 also define respective support surfaces that are substantially coplanar both with respect to the upper support surface 16 of the intermediate portion 14 of each modular element 12A, 12B, 12C, and with respect to the support surfaces defined by the first projections 26.

The second plurality of projections 32 is also provided with a second plurality of respective through holes 34. These second through holes 34 are lined up along a single axis C that is substantially parallel to the transversal axis B and is consequently substantially perpendicular to the feeding direction A of the conveyor belt 10. These second through holes 34 are also configured for receiving a connecting pin 30.

The first plurality of projections 26 and the second plurality of projections 32 feature mating profiles, so that the first projections 26 of a first modular element 12A can interpenetrate with the second projections 32 of an adjacent modular element 12B. Consequently, the first through holes 28 of the first modular element 12A line up along the same axis C as the second through holes 34 of an adjacent modular element 12B, so as to allow to insert a connecting pin 30 and to form a rotoidal joint between these two modular elements 12A and 12B.

In the embodiment here illustrated in the figures, the first through holes 28 feature a cross section whose shape is substantially circular, whereas at least a part of the second through holes 34, in particular those through holes 34 of the second plurality of projections 32 which are closer to the lateral sides 22 and 24 of each intermediate portion 14, features an elongate, substantially slot-like shape. The through holes 34 of the second plurality of projections 32 also have progressively growing dimensions starting from the center of their respective intermediate portion 14 up to their respective lateral sides 22 and 24. Conversely, the connecting pins 30 feature a substantially cylindrical shape. This specific configuration of the modular elements 12A, 12B, 12C makes it possible for the conveyor belt 10 to move on both rectilinear and curvilinear movement surfaces, thanks to the possibility for these modular elements 12A, 12B, 12C of rotating relative to each other on a plane parallel to their respective support surfaces.

A feature of the conveyor belt 10 according to the present invention consists in that the through hole 28 of at least either the first plurality of projections 26 or the second plurality of projections 32 placed on a first lateral side 22 of each intermediate portion 14 includes an internal portion 48 that comprises a seat 36 featuring a cross section that is wider than the remaining section of the through hole 28. This seat 36 is shaped for a pressure or snap insertion of a corresponding locking ball 38 of a respective connecting pin 30. The locking ball 38 has a diameter D1 that is greater than the cross section D2 of the connecting pin 30 and is constructed as a separate component with respect to such connecting pin 30. The function of this locking ball 38, when inserted into its own seat 36, is to keep its respective connecting pin 30 stably inserted inside the first through holes 28 and the second through holes 34 during the normal operation of the conveyor belt 10.

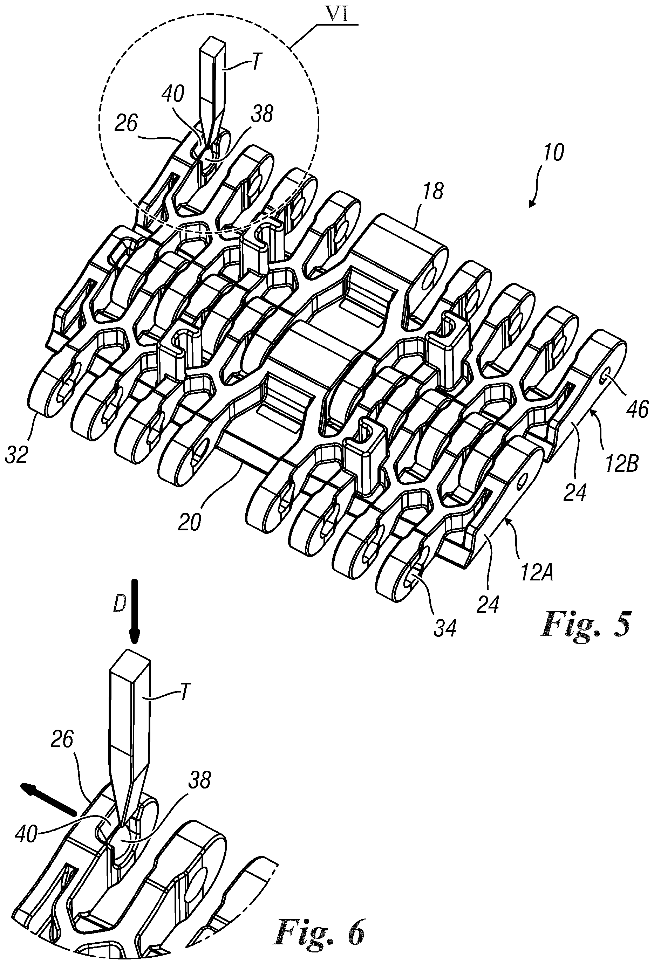

A hole or cavity 40 is thus obtained on the lateral projection 26 on which the seat 36 is arranged, oriented perpendicularly to the upper support surface 16 and put in communication with such seat 36. This hole or cavity 40 is arranged at a predefined distance from the center of the locking ball 38 whenever this is in position into its own seat 36. As shown in figures 5 and 6, this hole or cavity 40 makes it possible to insert, internally thereto, a tool T specifically designed to take the locking ball 38 out of its respective seat 36 by exerting a pushing action thereon, should the rotoidal joint have to be disassembled or, in other words, to make it possible to take the connecting pin 30 out of its respective through holes 28 and 34.

Thanks to this special configuration of the hole or cavity 40, the tool T acts perpendicularly to the insertion and extraction direction of the locking ball 38, which coincides with the direction of the axis C of the connecting pin 30. This allows to apply an extraction effort smaller than a disinsertion action exerted along such axis C of the connecting pin 30, because of the formation of a lever arm, equivalent to said predefined distance between the hole or cavity 40 and the center of the locking ball 38, between the axis D of the tool T and the center of the locking ball 38 when the latter is in position in its respective seat 36.

In addition, each hole or cavity 40 is conveniently obtained at the inner side of its respective lateral projection 26, that is to say the side opposed to the first lateral side 22 of the intermediate portion 14, and is only accessible from the lower surface of its respective modular element 12A, 12B, 12C. In other words, each hole or cavity 40 is completely inaccessible during the normal operation of the conveyor belt 10, thus preventing the locking ball 38 from undesirably coming out from its respective seat 36 in any way.

The internal portion 48 of the through hole 28 within which the seat is obtained also comprises an inlet cone or pilot hole 42 for the locking ball 38. The inlet cone 42 faces, with its own maximum diameter D4 which is greater than the diameter D1 of the locking ball 38, the first lateral side 22 and features a minimum diameter D3 that is smaller than the diameter D1 of the locking ball 38. The inlet cone 42 thus forms a narrowing 44 for pressure or snap inserting the locking ball 38 into its respective seat 36.

The inlet cone 42 makes the positioning of the locking ball 38 easier at its own seat 36 while assembling the rotoidal joint. Conversely, the narrowing 44 makes it possible a snap insertion of the locking ball 38 into its own seat 36, while preventing it from accidentally coming out, unless the tool T is intentionally used through its respective hole or cavity 40. Also, since the narrowing 44 has a cross section that substantially equals said minimum diameter D3 and is greater than or equal to the cross section D2 of the connecting pin 30, it is possible to take such connecting pin 30 out, if necessary, along the direction defined by the axis C and through the through hole 28 within which the seat 36 is obtained.

Having a cavity 40 is preferred than having a corresponding hole, in that a cavity allows to implement a lateral projection 26 having a thickness smaller than that requested by the presence of a hole for inserting the tool T. As a matter of fact, since the connecting pin 30 does not cause any stress onto the lateral projection 26, which is entirely occupied by the locking ball 38, material is saved when manufacturing its respective modular element 12A, 12B, 12C if the thickness of such lateral projection 26 is reduced. Preferably, the thickness of such lateral projection 26 is greater than the diameter D1 of the locking ball 38 by approximately 1%-10%.

As shown in the figures, the through hole 28 obtained on the lateral projection 26 opposed to that on which the seat 36 is obtained, that is to say the lateral projection 26 placed on the second lateral side 22 of each intermediate portion 14, can include an inner section 46 featuring a narrower cross section as compared to the remaining part of such through hole 28. Alternatively, the through hole 28 obtained on the lateral projection 26 opposed to that on which the seat 36 is obtained might have an entire cross section that is narrower than that of the remaining through holes 28 and 34. In both cases, the narrower cross section of the through hole 28 is smaller than the cross section D2 of the connecting pin 30, whereby such narrower cross section cannot be crossed by the connecting pin 30 in the direction of the axis C.

This feature makes it possible to prevent the connecting pin 30 from accidentally slipping off on the opposite side of the conveyor belt 10 (i.e. that of the second lateral side 24 in the embodiment illustrated in the attached figures) with respect to that side on which the locking balls 38 are positioned (i.e. that of the first lateral side 22 in the embodiment illustrated in the attached figures). The presence of a through hole 28 having an inner section 46 featuring a narrower cross section makes it possible, in any case, the introduction, through such narrower cross section, of a specifically designed tool (not shown) which, after taking the locking ball 38 out of its own seat 36, axially pushes the connecting pin 30 through such seat 36 to make it possible to extract it from its respective through holes 28 and 34, for example in the case of cleaning and/or maintenance operations to be carried out on the conveyor belt 10.

Both the modular elements 12A, 12B, 12C and the locking balls 38 are preferably made of thermoplastic materials such as, for instance, polyamide (PA), polyethylene (PE), acetal resin (polyoxymethylene or POM), or polybutylenterephthalate (PBT). The thermoplastic material that the locking balls 38 are made of preferably features a hardness lower than that of the thermoplastic material that the modular elements 12A, 12B, 12C are made of. This feature makes the insertion/extraction operations of each locking ball 38 into/from its corresponding seat 36 easier.

Conversely, the connecting pins 30 can be made either of thermoplastic materials or metal materials. Connecting pins 30 made of metal materials can be used, for example, on a conveyor belt 10 that is movable on a conveying line provided with magnetic curves. Alternatively, or additionally, at least part of the locking balls 38 can also be made of a ferritic material, still for use of the conveyor belt 10 on a conveying line provided with magnetic curves.

The method for assembling a conveyor belt 10 as described so far can thus be summarized as follows. First of all, at least one first modular element 12A and at least one second modular element 12B are positioned adjacent to each other, so that the first projections 26 of the first modular element 12A can interpenetrate with the second projections 32 of the second modular element 12B and the first through holes 28 of the first modular element 12A line up along the same axis C as the second through holes 34 of the second modular element 12B. Preferably is this operation carried out, the two modular elements 12A and 12B being positioned vertically, that is to say their respective upper support surfaces 16 being orthogonal with respect to a horizontal plane.

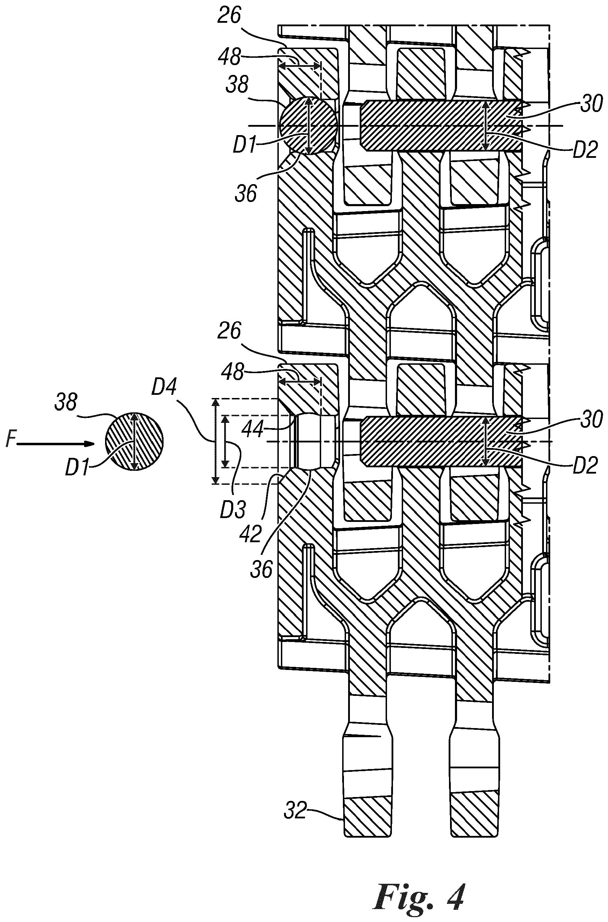

A connecting pin 30 is inserted into the first through holes 28 of the first modular element 12A and into the second through holes 34 of the second modular element 12B, so as to form a rotoidal joint between the two modular elements 12A and 12B. Finally, a predefined force F (figure 4) oriented along the axis C of the first through holes 28, the second through holes 34, and the connecting pin 30 is applied to a locking ball 38 to pressure or snap insert such locking ball 38 into its respective seat 36 obtained in the internal portion 48 of the through hole 28 of at least either the first plurality of projections 26 or the second plurality of projections 32 located on a first lateral side 22 of the intermediate portion of either the first modular element 12A or the second modular element 12B.

One single tool or different tools can be used to insert the connecting pin 30 into its respective through holes 28 and 34 and to insert the locking ball 38 in its respective seat 36. These tools are either of a mechanical type or a pneumatic type, or they might even be operated manually. The operations described so far are then sequentially repeated for each pair of modular elements of the conveyor belt 10, so as to obtain the desired length for such conveyor belt 10.

It has been thus demonstrated that an articulated link conveyor belt according to the present invention achieves the previously highlighted objects. A thus conceived articulated link conveyor belt according to the present invention is in any case susceptible of numerous modifications and variants, all falling within the same inventive concept; also, all details are replaceable by technically equivalent elements. In practice, the materials used, as well as shapes and dimensions, might be whatsoever depending on the technical requirements.

The scope of protection of the invention is therefore that set forth in the attached claims.

## Claims

1. A conveyor belt (10) movable along a predetermined feeding direction (A) in a conveying line, the conveyor belt (10) comprising:
- a plurality of modular elements (12A, 12B, 12C) arranged in sequence and articulated between each other;
- at least one connecting pin (30), which forms part of the articulation system of the conveyor belt (10); and
- at least one locking ball (38),
wherein each modular element (12A, 12B, 12C) comprises in turn:
- a respective intermediate portion (14), which extends along a transversal axis (B) substantially perpendicular to said feeding direction (A) and which is provided with an upper support surface (16) for the objects to be conveyed;
- a front side (18), a rear side (20), a first lateral side (22), and a second lateral side (24) of each intermediate portion (14);
- a first plurality of projections (26), which extend along said feeding direction (A) on the front side (18) of each intermediate portion (14) and which are provided with a first plurality of respective through holes (28) aligned along a single axis (C) substantially parallel to said transversal axis (B); and
- a second plurality of projections (32), which extend along said feeding direction (A), but with an opposite direction with respect to the first plurality of projections (26), on the rear side (20) of each intermediate portion (14) and which are provided with a second plurality of respective through holes (34) aligned along a single axis (C) substantially parallel to said transversal axis (B),
wherein the first plurality of projections (26) and the second plurality of projections (32) have mating profiles, so that the first projections (26) of a first modular element (12A) can be interpenetrated with the second projections (32) of an adjacent modular element (12B), and the first through holes (28) of the first modular element (12A) are arranged along the same axis (C) of the second through holes (34) of the adjacent modular element (12B), so as to allow the introduction of the connecting pin (30) to form a rotoidal joint between said two modular elements (12A, 12B), and wherein the through hole (28) of at least one of the first plurality of projections (26) or the second plurality of projections (32) placed on a first lateral side (22) of each intermediate portion (14) is provided with an internal portion (48) which comprises a seat (36) with enlarged cross-section with respect to the remaining part of said through hole (28), the conveyor belt (10) being **characterized in that** said at last one locking ball (38) has a diameter (D1) that is greater than the cross-section (D2) of the connecting pin (30) and is made as a separate component with respect to said connecting pin (30), said seat (36) being shaped for pressure or snap insertion of said at least one locking ball (38).

2. The conveyor belt (10) according to claim 1, **characterized in that** on the lateral projection (26) on which said seat (36) is obtained, at least one hole or cavity (40) is obtained, oriented perpendicular to said upper support surface (16) and placed in communication with said seat (36), said hole or cavity (40) being arranged at a predetermined distance with respect to the center of the locking ball (38) when engaged in its respective seat (36), said hole or cavity (40) allowing the insertion, internally thereto, of a tool (T) designed to extract the locking ball (38) from its respective seat (36), should the rotoidal joint have to be disassembled.

3. The conveyor belt (10) according to claim 2, **characterized in that** each hole or cavity (40) is formed at the inner side of its respective lateral projection (26), that is to say the opposite side with respect to the first lateral side (22) of the intermediate portion (14), and is only accessible from the lower surface of its respective modular element (12A, 12B, 12C).

4. The conveyor belt (10) according to any claims 1 to 3, **characterized in that** the internal portion (48) of the through hole (28) within which said seat (36) is formed also comprises an inlet cone (42) for the locking ball (38), said inlet cone (42) facing, with its own maximum diameter (D4) which is greater than the diameter (D1) of said locking ball (38), the first lateral side (22) and being provided with a minimum diameter (D3) that is smaller than the diameter (D1) of said locking ball (38), said inlet cone (42) thus forming a narrowing (44) for pressure or snap insertion of said locking ball (38) within its respective seat (36), said narrowing (44) having a cross section which is substantially equal to said minimum diameter (D3) and which is greater than or equal to the cross section (D2) of the connecting pin (30).

5. The conveyor belt (10) according to any claims 1 to 4, **characterized in that** the thickness of the lateral projection (26) on which said seat (36) is obtained is greater than the diameter (D1) of the locking ball (38) by about 1%-10%.

6. The conveyor belt (10) according to any claims 1 to 5, **characterized in that** both the modular elements (12A, 12B, 12C) and the locking balls (38) are made of thermoplastic materials, wherein the thermoplastic material that the locking balls (38) are made of has a lower hardness than the thermoplastic material that the modular elements (12A, 12B, 12C) are made of.

7. The conveyor belt (10) according to any claims 1 to 5, **characterized in that** at least a part of the locking balls (38) is made of a ferritic material.

8. The conveyor belt (10) according to any claims 1 to 7, **characterized in that** the through hole (28) obtained on the lateral projection (26) opposed to that on which the seat (36) is formed, that is to say the lateral projection (26) placed on the second lateral side (22) of each intermediate portion (14), is provided with an inner section (46) having a narrower cross section with respect to the remaining part of said through hole (28), said narrower cross section being smaller than the cross section of the connecting pin (30), so that said narrower cross section cannot be crossed by said connecting pin (30).

9. The conveyor belt (10) according to any claims 1 to 7, **characterized in that** the through hole (28) obtained on the lateral projection (26) opposed to that on which the seat (36) is obtained, that is to say the lateral projection (26) placed on the second lateral side (22) of each intermediate portion (14), has the entire cross section that is narrower than that of the remaining through holes (28, 34), said narrower cross section being smaller than the cross section of the connecting pin (30), so that said narrower cross section cannot be crossed by said connecting pin (30).

10. The conveyor belt (10) according to any claims 1 to 9, **characterized in that**:
- the cross section of the first through holes (28) has a substantially circular shape;
- at least part of the second through holes (34), in particular the through holes (34) of the second plurality of projections (32) placed closer to the lateral sides (22, 24) of each intermediate portion (14), has an elongate, substantially slot-like shape;
- the through holes (34) of said second plurality of projections (32) have progressively increasing dimensions starting from the center of the respective intermediate portion (14) and up to the respective lateral sides (22, 24); and
- the connecting pins (30) have a substantial cylindrical shape.

11. The conveyor belt (10) according to any claims 1 to 10, **characterized in that** the first projections (26) define respective supporting surfaces that are substantially coplanar with respect to the upper support surface (16) of the intermediate portion (14) of each modular element (12A, 12B, 12C), whereas the second projections (32) define respective support surfaces that are substantially coplanar both with respect to said upper support surface (16) and with respect to the support surfaces defined by the first projections (26).

12. A method for assembling a conveyor belt (10) according to any preceding claims, the method comprising in sequence the steps of:
- positioning at least one first modular element (12A) and at least one second modular element (12B) adjacent to each other, so that the first projections (26) of the first modular element (12A) can interpenetrate with the second projections (32) of the second modular element (12B) and the first through holes (28) of the first modular element (12A) line up along the same axis (C) as the second through holes (34) of the second modular element (12B);
- inserting a connecting pin (30) into the first through holes (28) of the first modular element (12A) and into the second through holes (34) of the second modular element (12B) to form a rotoidal joint between said two modular elements (12A, 12B);
- applying a predefined force (F) to a locking ball (38), oriented along the axis (C) of the first through holes (28), the second through holes (34), and the connecting pin (30), to pressure or snap insert said locking ball (38) into its respective seat (36) obtained in the internal portion (48) of the through hole (28) of at least one of the first plurality of projections (26) or the second plurality of projections (32) placed on a first lateral side (22) of the intermediate portion of either said first modular element (12A) or said second modular element (12B).

## Patentansprüche

1. Transportband (10), das entlang einer festgelegten Förderrichtung (A) in einer Transportanlage beweglich ist, wobei das Transportband (10) Folgendes umfasst:
- mehrere modulare Elemente (12A, 12B, 12C), die aufeinanderfolgend angeordnet und über Gelenke miteinander verbunden sind,
- mindestens einen Verbindungsstift (30), der einen Teil des Gelenkverbindungssystems des Transportbandes (10) bildet, und
- mindestens eine Verschlusskugel (38),
wobei jedes modulare Element (12A, 12B, 12C) wiederum Folgendes umfasst:
- einen jeweiligen Zwischenabschnitt (14), der sich entlang einer Querachse (B), die im Wesentlichen senkrecht zu der Förderrichtung (A) liegt, erstreckt und der mit einer oberen Abstützungsoberfläche (16) für die zu transportierenden Objekte versehen ist,
- eine Vorderseite (18), eine Rückseite (20), eine erste laterale Seite (22) und eine zweite laterale Seite (24) jedes Zwischenabschnitts (14),
- eine erste Mehrzahl von Vorsprüngen (26), die sich entlang der Förderrichtung (A) an der Vorderseite (18) jedes Zwischenabschnitts (14) erstrecken und die mit einer ersten Mehrzahl jeweiliger Durchgangsöffnungen (28) versehen sind, die entlang einer einzelnen Achse (C), die im Wesentlichen parallel zu der Querachse (B) liegt, gefluchtet sind, und
- eine zweite Mehrzahl von Vorsprüngen (32), die sich entlang der Förderrichtung (A), aber mit einer entgegengesetzten Richtung in Bezug auf die erste Mehrzahl von Vorsprüngen (26), an der Rückseite (20) jedes Zwischenabschnitts (14) erstrecken und die mit einer zweiten Mehrzahl jeweiliger Durchgangsöffnungen (34) versehen sind, die entlang einer einzelnen Achse (C), die im Wesentlichen parallel zu der Querachse (B) liegt, gefluchtet sind,
wobei die erste Mehrzahl von Vorsprüngen (26) und die zweite Mehrzahl von Vorsprüngen (32) zueinander passende Profile aufweisen, sodass die ersten Vorsprünge (26) eines ersten modularen Elements (12A) mit den zweiten Vorsprüngen (32) eines benachbarten modularen Elements (12B) ineinandergreifen können und die ersten Durchgangsöffnungen (28) des ersten modularen Elements (12A) entlang der gleichen Achse (C) der zweiten Durchgangsöffnungen (34) des benachbarten modularen Elements (12B) angeordnet sind, sodass die Einsetzung des Verbindungsstifts (30) ermöglicht wird, um ein Rotoidalgelenk zwischen zwei modularen Elementen (12A, 12B) zu bilden, und wobei die Durchgangsöffnung (28) mindestens einer der ersten Mehrzahl von Vorsprüngen (26) oder der zweiten Mehrzahl von Vorsprüngen (32), die an einer ersten lateralen Seite (22) jedes Zwischenabschnitts (14) platziert sind, mit einem Innenabschnitt (48) versehen ist, der einen Sitz (36) mit vergrößertem Querschnitt in Bezug auf den verbleibenden Teil der Durchgangsöffnung (28) umfasst, wobei das Transportband (10) **dadurch gekennzeichnet ist, dass** die mindestens eine Verschlusskugel (38) einen Durchmesser (D1) aufweist, der größer als der Querschnitt (D2) des Verbindungsstifts (30) ist und als separates Bauteil in Bezug auf den Verbindungsstift (30) hergestellt ist, wobei der Sitz (36) für eine Press- oder Rasteinsetzung der mindestens einen Verschlusskugel (38) geformt ist.

2. Transportband (10) nach Anspruch 1, **dadurch gekennzeichnet, dass** an dem lateralen Vorsprung (26), an dem der Sitz (36) erzielt ist, mindestens eine Öffnung oder Vertiefung (40) erzielt ist, die senkrecht zu der oberen Abstützungsoberfläche (16) ausgerichtet und in Kommunikation mit dem Sitz (36) platziert ist, wobei die Öffnung oder Vertiefung (40) in einem festgelegten Abstand in Bezug auf die Mitte der Verschlusskugel (38) angeordnet ist, wenn diese mit ihrem jeweiligen Sitz (36) in Eingriff steht, wobei die Öffnung oder Vertiefung (40) das Einsetzen eines Werkzeugs (T) in sie hinein ermöglicht, das dafür gestaltet ist, die Verschlusskugel (38) aus ihrem jeweiligen Sitz (36) zu extrahieren, sollte das Rotoidalgelenk demontiert werden müssen.

3. Transportband (10) nach Anspruch 2, **dadurch gekennzeichnet, dass** jede Öffnung oder Vertiefung (40) an der Innenseite ihres jeweiligen lateralen Vorsprungs (26) gebildet ist, das heißt, an der gegenüberliegenden Seite in Bezug auf die erste laterale Seite (22) des Zwischenabschnitts (14), und nur von der unteren Oberfläche ihres jeweiligen modularen Elements (12A, 12B, 12C) aus zugänglich ist.

4. Transportband (10) nach einem der Ansprüche 1 bis 3, **dadurch gekennzeichnet, dass** der Innenabschnitt (48) der Durchgangsöffnung (28), in dem der Sitz (36) gebildet ist, außerdem einen Einlasskegel (42) für die Verschlusskugel (38) umfasst, wobei der Einlasskegel (42) mit seinem eigenen maximalen Durchmesser (D4), der größer als der Durchmesser (D1) der Verschlusskugel (38) ist, zu der ersten lateralen Seite (22) weist und mit einem minimalen Durchmesser (D3) versehen ist, der kleiner als der Durchmesser (D1) der Verschlusskugel (38) ist, wobei der Einlasskegel (42) somit eine Verengung (44) für eine Press- oder Rasteinsetzung der mindestens einen Verschlusskugel (38) in ihren jeweiligen Sitz (36) bildet, wobei die Verengung (44) einen Querschnitt aufweist, der im Wesentlichen gleich dem minimalen Durchmesser (D3) ist und der größer als oder gleich dem Querschnitt (D2) des Verbindungsstifts (30) ist.

5. Transportband (10) nach einem der Ansprüche 1 bis 4, **dadurch gekennzeichnet, dass** die Dicke des lateralen Vorsprungs (26), an dem der Sitz (36) erzielt ist, um etwa 1 %-10 % größer als der Durchmesser (D1) der Verschlusskugel (38) ist.

6. Transportband (10) nach einem der Ansprüche 1 bis 5, **dadurch gekennzeichnet, dass** sowohl die modularen Elemente (12A, 12B, 12C) als auch die Verschlusskugeln (38) aus thermoplastischen Materialien hergestellt sind, wobei das thermoplastische Material, aus dem die Verschlusskugeln (38) hergestellt sind, eine geringere Härte aufweist als das thermoplastische Material, aus dem die modularen Elemente (12A, 12B, 12C) hergestellt sind.

7. Transportband (10) nach einem der Ansprüche 1 bis 5, **dadurch gekennzeichnet, dass** zumindest ein Teil der Verschlusskugeln (38) aus einem ferritischen Material hergestellt ist.

8. Transportband (10) nach einem der Ansprüche 1 bis 7, **dadurch gekennzeichnet, dass** die Durchgangsöffnung (28), die an dem lateralen Vorsprung (26) gegenüber dem erzielt ist, an dem der Sitz (36) gebildet ist, das heißt an dem lateralen Vorsprung (26), der an der zweiten lateralen Seite (22) jedes Zwischenabschnitts (14) platziert ist, mit einem Innenabschnitt (46) versehen ist, der einen engeren Querschnitt in Bezug auf den verbleibenden Teil der Durchgangsöffnung (28) aufweist, wobei der engere Querschnitt kleiner als der Querschnitt des Verbindungsstifts (30) ist, sodass der engere Querschnitt nicht durch den Verbindungsstift (30) durchquert werden kann.

9. Transportband (10) nach einem der Ansprüche 1 bis 7, **dadurch gekennzeichnet, dass** die Durchgangsöffnung (28), die an dem lateralen Vorsprung (26) gegenüber dem erzielt ist, an dem der Sitz (36) gebildet ist, das heißt an dem lateralen Vorsprung (26), der an der zweiten lateralen Seite (22) jedes Zwischenabschnitts (14) platziert ist, den gesamten Querschnitt aufweist, der enger als der der verbleibenden Durchgangsöffnungen (28, 34) ist, wobei der engere Querschnitt kleiner als der Querschnitt des Verbindungsstifts (30) ist, sodass der engere Querschnitt nicht durch den Verbindungsstift (30) durchquert werden kann.

10. Transportband (10) nach einem der Ansprüche 1 bis 9, **dadurch gekennzeichnet, dass**
- der Querschnitt der ersten Durchgangsöffnungen (28) eine im Wesentlichen runde Form aufweist,
- zumindest ein Teil der zweiten Durchgangsöffnungen (34), insbesondere die Durchgangsöffnungen (34) der zweiten Mehrzahl von Vorsprüngen (32), die näher an den lateralen Seiten (22, 24) jedes Zwischenabschnitts (14) platziert sind, eine längliche, im Wesentlichen schlitzartige Form aufweisen,
- die Durchgangsöffnungen (34) der zweiten Mehrzahl von Vorsprüngen (32) ausgehend von der Mitte des jeweiligen Zwischenabschnitts (14) und bis zu den jeweiligen lateralen Seiten (22, 24) fortwährend zunehmende Abmessungen aufweisen und
- die Verbindungsstifte (30) eine im Wesentlichen zylindrische Form aufweisen.

11. Transportband (10) nach einem der Ansprüche 1 bis 10, **dadurch gekennzeichnet, dass** die ersten Vorsprünge (26) jeweilige Abstützungsoberflächen definieren, die im Wesentlichen koplanar in Bezug auf die obere Abstützungsoberfläche (16) des Zwischenabschnitts (14) jedes modularen Elements (12A, 12B, 12C) liegen, während die zweiten Vorsprünge (32) jeweilige Abstützungsoberflächen definieren, die im Wesentlichen koplanar in Bezug auf die obere Abstützungsoberfläche (16) und in Bezug auf die durch die ersten Vorsprünge (26) gebildeten Abstützungsoberflächen liegen.

12. Verfahren zum Montieren eines Transportbandes (10) nach einem der vorhergehenden Ansprüche, wobei das Verfahren nacheinander die folgenden Schritte umfasst:
- Positionieren mindestens eines ersten modularen Elements (12A) und mindestens eines zweiten modularen Elements (12B) benachbart zueinander, sodass die ersten Vorsprünge (26) des ersten modularen Elements (12A) mit den zweiten Vorsprünge (32) des zweiten modularen Elements (12B) ineinander greifen können und sich die ersten Durchgangsöffnungen (28) des ersten modularen Elements (12A) entlang der gleichen Achse (C) wie die zweiten Durchgangsöffnungen (34) des zweiten modularen Elements (12B) ausrichten,
- Einsetzen eines Verbindungsstifts (30) in die ersten Durchgangsöffnungen (28) des ersten modularen Elements (12A) und in die zweiten Durchgangsöffnungen (34) des zweiten modularen Elements (12B), um ein Rotoidalgelenk zwischen den zwei modularen Elementen (12A, 12B) zu bilden,
- Ausüben einer vordefinierten Kraft (F) auf eine Verschlusskugel (38), die entlang der Achse (C) der ersten Durchgangsöffnungen (28), der zweiten Durchgangsöffnungen (34) und des Verbindungsstifts (30) ausgerichtet ist, um die Verschlusskugel (38) durch Pressen oder Rasten in ihren jeweiligen Sitz (36 einzusetzen, der in dem Innenabschnitt (48) der Durchgangsöffnung (28) mindestens eines der ersten Mehrzahl von Vorsprüngen (26) oder der zweiten Mehrzahl von Vorsprüngen (32) erzielt wird, platziert an einer ersten lateralen Seite (22) des Zwischenabschnitts entweder des ersten modularen Elements (12A) oder des zweiten modularen Elements (12B).

## Revendications

1. Bande transporteuse (10) mobile le long d'une direction d'alimentation prédéterminée (A) dans une ligne de transport, la bande transporteuse (10) comprenant :
- une pluralité d'éléments modulaires (12A, 12B, 12C) disposés en séquence et articulés entre eux ;
- au moins un axe de liaison (30), qui fait partie du système d'articulation de la bande transporteuse (10) ; et
- au moins une bille de verrouillage (38), où chaque élément modulaire (12A, 12B, 12C) comprend à son tour
- une partie intermédiaire respective (14), qui s'étend le long d'un axe transversal (B) sensiblement perpendiculaire à ladite direction d'alimentation (A) et qui est pourvu d'une surface supérieure de support (16) pour les objets à transporter ;
- un côté avant (18), un côté arrière (20), un premier côté latéral (22) et un deuxième côté latéral (24) de chaque partie intermédiaire (14) ;
- une première pluralité de saillies (26), qui s'étendent le long de ladite direction d'alimentation (A) sur le côté avant (18) de chaque partie intermédiaire (14) et qui sont pourvues d'une première pluralité de trous traversants respectifs (28) alignés le long d'un axe unique (C) sensiblement parallèle audit axe transversal (B) ; et
- une deuxième pluralité de projections (32), qui s'étendent le long de ladite direction d'alimentation (A), mais avec une direction opposée par rapport à la première pluralité de saillies (26), sur la face arrière (20) de chaque partie intermédiaire (14) et qui sont pourvues d'une seconde pluralité de trous traversants respectifs (34) alignés le long d'un axe unique (C) sensiblement parallèle audit axe transversal (B),
dans lequel la première pluralité de saillies (26) et la deuxième pluralité de saillies (32) ont des profils correspondants, de sorte que les premières saillies (26) d'un premier élément modulaire (12A) peuvent être interpénétrées avec les deuxièmes saillies (32) d'un élément modulaire adjacent (12B), et les premiers trous traversants (28) du premier élément modulaire (12A) sont disposés le long du même axe (C) des deuxièmes trous traversants (34) de l'élément modulaire adjacent (12B), de manière à permettre l'introduction de broches de connexion (30) pour former un joint rotoïde entre les deux des éléments modulaires (12A, 12B), et dans lequel le trou traversant (28) d'au moins une des projections de la première pluralité de projections (26) ou de la deuxième pluralité de projections (32) placées sur un premier côté latéral (22) de chaque partie intermédiaire (14) est pourvu d'une partie interne (48) qui comprend un siège (36) avec une section transversale élargie par rapport à la partie restante dudit trou traversant (28), la bande transporteuse (10) étant **caractérisée en ce que** ladite au moins une bille de verrouillage (38) a un diamètre (D1) qui est supérieur à la section transversale (D2) de la broche de connexion (30) et est réalisée en tant que composant séparé par rapport à ladite broche de connexion (30), ledit siège (36) étant formé pour une insertion par pression ou par encliquetage de ladite au moins une bille de verrouillage (38).

2. Bande transporteuse (10) selon la revendication 1, **caractérisée en ce que** sur la projection latérale (26) sur laquelle ledit siège (36) est obtenu, au moins un trou ou cavité (40) est obtenu, orienté perpendiculairement à ladite surface de support supérieure (16) et placé en communication avec ledit siège (36), ledit trou ou cavité (40) étant disposé à une distance prédéterminée par rapport au centre de la bille de verrouillage (38) lorsqu'il est engagé dans son siège respectif (36), ledit trou ou cavité (40) permettant l'insertion, à l'intérieur de celui-ci, d'un outil (T) conçu pour extraire la bille de verrouillage (38) de son siège respectif (36), au cas où le joint rotoïde devrait être démontée.

3. Bande transporteuse (10) selon la revendication 2, **caractérisée en ce que** chaque trou ou cavité (40) est formé sur le côté intérieur de sa saillie latérale respective (26), c'est-à-dire le côté opposé par rapport au premier côté latéral (22) de la partie intermédiaire (14), et n'est accessible que depuis la surface inférieure de son élément modulaire respectif (12A, 12B, 12C).

4. Bande transporteuse (10) selon l'une quelconque des revendications 1 à 3, **caractérisée en ce que** la partie interne (48) du trou traversant (28) dans lequel ledit siège (36) est formé comprend également un cône d'entrée (42) pour la bille de verrouillage (38), ledit cône d'entrée (42) faisant face, avec son propre diamètre maximum (D4) qui est supérieur au diamètre (D1) de ladite bille de blocage (38), au premier côté latéral (22) et étant dotée d'un diamètre minimum (D3) qui est inférieur au diamètre (D1) de ladite bille de blocage (38), ledit cône d'entrée (42) formant ainsi un rétrécissement (44) pour l'insertion par pression ou par encliquetage de ladite bille de verrouillage (38) dans son siège respectif (36), ledit rétrécissement (44) ayant une section transversale qui est sensiblement égale audit diamètre minimum (D3) et qui est supérieure ou égale à la section transversale (D2) de la broche de connexion (30).

5. Bande transporteuse (10) selon l'une quelconque des revendications 1 à 4, **caractérisée en ce que** l'épaisseur de la saillie latérale (26) sur laquelle ledit siège (36) est obtenu est supérieure au diamètre (D1) de la bille de verrouillage (38) d'environ 1%-10%.

6. Bande transporteuse (10) selon l'une quelconque des revendications 1 à 5, **caractérisée en ce que** les éléments modulaires (12A, 12B, 12C) et les billes de blocage (38) sont tous deux en matière thermoplastique, la matière thermoplastique dont sont faites les billes de blocage (38) ayant une dureté inférieure à celle de la matière thermoplastique dont sont faits les éléments modulaires (12A, 12B, 12C).

7. Bande transporteuse (10) selon l'une quelconque des revendications 1 à 5, **caractérisée en ce qu'**au moins une partie des billes de blocage (38) est constituée d'un matériau ferritique.

8. Bande transporteuse (10) selon l'une quelconque des revendications 1 à 7, **caractérisée en ce que** le trou traversant (28) obtenu sur la saillie latérale (26) opposée à celle sur laquelle le siège (36) est formé, c'est-à-dire la saillie latérale (26) placée sur le second côté latéral (22) de chaque partie intermédiaire (14), est pourvu d'une section intérieure (46) ayant une section transversale plus étroite par rapport à la partie restante dudit trou traversant (28), ladite section transversale plus étroite étant plus petite que la section transversale de la broche de connexion (30), de sorte que ladite section transversale plus étroite ne peut pas être croisée par ladite broche de connexion (30).

9. Bande transporteuse (10) selon l'une quelconque des revendications 1 à 7, **caractérisée en ce que** le trou traversant (28) obtenu sur la saillie latérale (26) opposée à celle sur laquelle le siège (36) est obtenu, c'est-à-dire la saillie latérale (26) placée sur le deuxième côté latéral (22) de chaque partie intermédiaire (14), a une section transversale entière qui est plus étroite que celle des trous traversants restants (28, 34), ladite section transversale plus étroite étant plus petite que la section transversale de la broche de connexion (30), de sorte que ladite section transversale plus étroite ne peut pas être croisée par ladite broche de connexion (30).

10. Bande transporteuse (10) selon l'une quelconque des revendications 1 à 9, **caractérisée en ce que** :
- la section transversale des premiers trous traversants (28) a une forme sensiblement circulaire ;
- au moins une partie des deuxièmes trous traversants (34), en particulier les trous traversants (34) de la deuxième pluralité de saillies (32) placées plus près des côtés latéraux (22, 24) de chaque partie intermédiaire (14), a une forme allongée, sensiblement en forme de fente ;
- les trous traversants (34) de ladite deuxième pluralité de saillies (32) ont des dimensions progressivement croissantes à partir du centre de la partie intermédiaire respective (14) et jusqu'aux côtés latéraux respectifs (22, 24) ; et
- les broches de connexion (30) ont une forme sensiblement cylindrique.

11. Bande transporteuse (10) selon l'une quelconque des revendications 1 à 10, **caractérisée en ce que** les premières saillies (26) définissent des surfaces de support respectives qui sont sensiblement coplanaires par rapport à la surface de support supérieure (16) de la partie intermédiaire (14) de chaque élément modulaire (12A, 12B, 12C), tandis que les secondes saillies (32) définissent des surfaces de support respectives qui sont sensiblement coplanaires à la fois par rapport à ladite surface de support supérieure (16) et par rapport aux surfaces de support définies par les premières saillies (26).

12. Procédé d'assemblage d'une bande transporteuse (10) conformément à toute revendication précédente, le procédé comprenant en séquence les étapes suivantes :
- positionner au moins un premier élément modulaire (12A) et au moins un deuxième élément modulaire (12B) l'un à côté de l'autre, de sorte que les premières saillies (26) du premier élément modulaire (12A) puissent interpénétrer avec les deuxièmes saillies (32) du deuxième élément modulaire (12B) et que les premiers trous traversants (28) du premier élément modulaire (12A) s'alignent le long du même axe (C) que les deuxièmes trous traversants (34) du deuxième élément modulaire (12B) ;
- insérer une broche de connexion (30) dans les premiers trous traversants (28) du premier élément modulaire (12A) et dans les seconds trous traversants (34) du second élément modulaire (12B) pour former un joint rotoïde entre lesdits deux éléments modulaires (12A, 12B) ;
- appliquer une force prédéfinie (F) à une bille de verrouillage (38), orientée le long de l'axe (C) des premiers trous traversants (28), des seconds trous traversants (34) et de la broche de connexion (30), pour insérer par pression ou par encliquetage ladite bille de verrouillage (38) dans son siège respectif (36) obtenu dans la partie interne (48) du trou traversant (28) d'au moins une de la première pluralité de saillies (26) ou de la deuxième pluralité de saillies (32) placées sur un premier côté latéral (22) de la partie intermédiaire de l'un ou l'autre dudit premier élément modulaire (12A) ou dudit deuxième élément modulaire (12B).
